# EUROPEAN PATENT APPLICATION

(11) **EP 1 955 582 A2**
(43) Date of publication of application: **13.08.2008**
(21) Application number: 07024460.3
(22) Date of filing: 18.12.2007
(51) Int. Cl.: A01D 51/00, A23N 12/02, A23N 15/00

(54) **Device and method for processing cucurbita moschata and food products produced in this way**

(30) Priority: 09.02.2007 SI 200700030
(71) Applicant: Drevesek, Rudi, 9000 Murska Sobota (SI); TIKEV d. o. o., 9223 Dobrovnik (SI)
(72) Inventor: Drevesek, Rudi, 9000 Murska Sobota (SI)
(74) Representative: Kloiber, Thomas

(57) **Abstract**

The device and method for processing cucurbita moschata, and products produced in this way, solve the problem of simple and healthy production of products from cucurbita moschata (1), which primarily consist of collecting and loading by means of the harvesting device (3) and conveyor belt (6), of washing of cucurbita moschata (1) in the washing device (9), of cutting into halves in the cutting device (22), sucking of seeds, cutting of pumpkin halves into smaller pieces using the saw (24) and of heat treatment of pumpkin pulp in the vacuum evaporator or drying of pieces in the condensing dryer. The harvesting device (3) consists of the conveyor belt (4) and collecting area (5), which, together with the conveyor belt (6), enable mechanical collecting and loading of cucurbita moschata (1) without any internal or external damages. The same applies for washing of cucurbita moschata (1) in the washing device (9), which basically consists of the outer vessel (10) and the inner vessel (11), which are connected on a flow-through basis, the turbulence is caused by water and/or air, which is brought into the vessel (11) through the tubes (14).

## Description

The subject of the invention is the device and procedure for processing cucurbita moschata and products produced in this way, or more precisely, it is devices and procedures for picking up and loading of cucurbita moschata, and for washing and cutting as well as for heat treatment and drying of cucurbita moschata and products from cucurbita moschata, produced with these devices and according to these procedures, including pumpkin pulp, pumpkin marmalade and jam, candied pumpkin, pumpkin syrup, pumpkin juice, pumpkin dressing, pumpkin edible oil, pumpkin edible vinegar, pumpkin brandy, pumpkin liqueur, pumpkin wine and dried pumpkin pieces.

According to the international patent classification this invention belongs to A 23N 15/04, B 08B 3/04 and, additionally, to A 23L 1/06.

The technical problem solved by this invention is such a technological procedure of processing cucurbita moschata, and such a construction of a device for carrying out this procedure so that they, combined, could enable simple picking up and processing of cucurbita moschata into various healthy food products, which will preserve all the characteristics of fresh cucurbita moschata, i.e. vitamins, nutrients and the organoleptic characteristics.

There are no known solutions related to devices and procedures for collecting pumpkins mechanically and related to devices for mechanical collecting, washing and heat treatment of pumpkins. There are, however, known solutions for heat treatment of pumpkins and other agricultural products, including pumpkins, that are carried out at a very high temperature, approximately at 120°C. As a result, most of the nutrients and vitamins are lost, and the product loses its original colour and taste. Consequently, producers, after heat treatment of pumpkins has been completed, i.e. after pasteurization, add various harmful substances, including additives, preservatives, etc. Washing of pumpkins is carried out manually or in inappropriate devices. This results in inadequately washed and/or externally damaged pumpkins. Based on this known condition, both, the problem in relation to devices and the problem associated with pumpkin processing procedure that would provide original and healthy food products remain unsolved.

According to the invention, the problem is resolved by a device and procedure for processing cucurbita moschata and food products produced in this way, including devices and procedures of mechanical collecting, loading, washing and cutting of cucurbita moschata and the procedure of heat treatment and drying of pumpkins. The invention will be described in relation to the feasibility example and figures which show as follows:
- Fig. 1: organisation chart indicating the types and the sequence of procedures according to this invention
- Fig. 2: scheme of the device for mechanical collecting and loading of cucurbita moschata, in plan view
- Fig. 3: transverse section, vertical axis, of the device for washing of pumpkins
- Fig. 4: scheme of the device for cutting cucurbita moschata into halves
- Fig. 5: scheme of the band saw for cutting pumpkin halves into smaller pieces

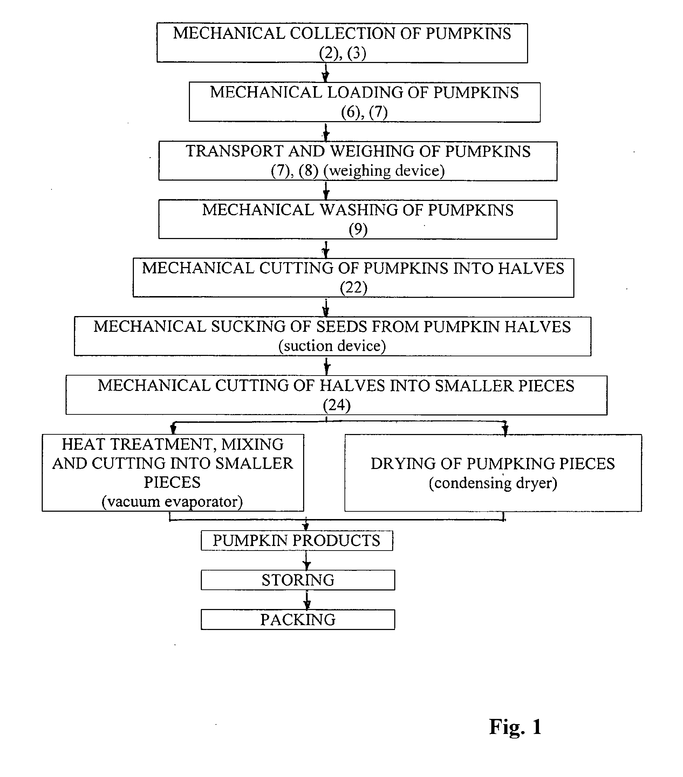

Fig. 1 shows the procedure of collecting and processing of cucurbita moschata 1, according to the feasibility sequence of operations with corresponding devices required for these operations. The procedure according to this invention comprises collecting of cucurbita moschata 1 mechanically from agricultural land, using a working machine 2 and device 3, and then loading them mechanically to the vehicle 7 and transporting them, using the vehicle 7, weighing them, washing them mechanically by means of device 9, cutting of cucurbita moschata 1 into halves mechanically, using device 22, sucking out pumpkins seeds, using an appropriate suction device, furthermore, mechanical cutting of pumpkin halves into smaller pieces, using a saw 24, heat treatment in an appropriate vacuum evaporator, with the purpose to obtain pumpkin mash forming a basis for final products, in pulp, fluid or solid condition, then also storage in appropriate bigger vessels, e.g. in tanks, and finally also packing of pumpkin products into smaller packages. Technological operations of the procedure are described in detail later, including the devices required for carrying out these operations, which are also a part this invention.

Collecting and loading of cucurbita moschata 1 from agricultural land are carried out by means of a working machine 2, to which a device 3 for collecting and loading of cucurbita moschata 1 is fixed via a cardan 29 and carrier, which is not presented; this device 3 comprises a shorter conveyor belt 4, collecting area 5 and longer conveyor belt 6. The working machine 2 can be a tractor, harvester or some other suitable universal or dedicated machines.

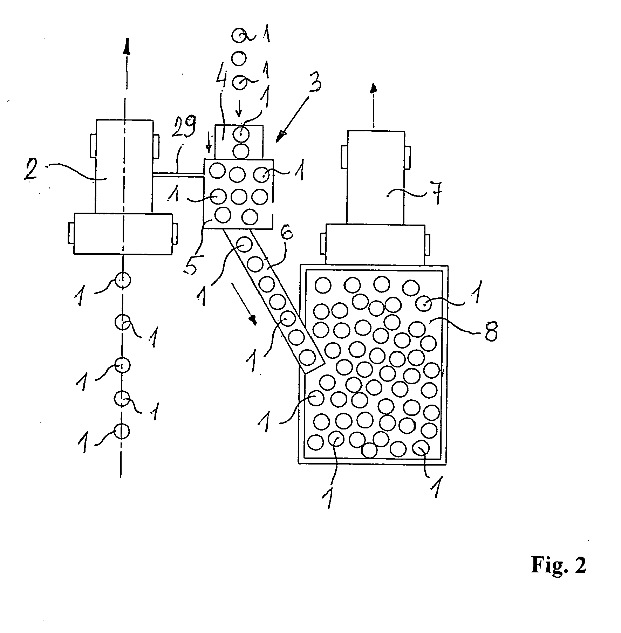

The device 3 is, in relation to the presented feasibility example in Fig. 2, positioned on the flank side of the working machine 2, so that the conveyor belt 4, with its longitudinal axis, is positioned in the direction of driving; in some other feasibility example, the device 3 can be placed on one of the remaining parts of the working machine 2.

As already mentioned, the device 3 for collecting and loading of cucurbita moschata 1 is directly connected, via the cardan 29, to the drive of the working machine 2, whereby conveyor belts 4 and 6, fixed to the collecting area 5, are also driven by it. The conveyor belt 4 is preferentially placed on the front side and the conveyor belt 6 on the back side of the collecting area 5, and the belts 4 and 5 can be of optional, fixed or adjustable construction. The collecting area 5 preferentially tilts backward towards the conveyor belt 6.

While the working machine 2 moves on agricultural land in the direction of driving, the conveyor belt 4 of the device 3 gathers cucurbita moschata 1 and transports them to the collecting area 5. Simultaneously or with a time delay, cucurbita moschata 1 roll from the collecting area 5 to the conveyor belt 6 and are transported on it to the trailer 8 of the vehicle 7, which runs along and parallelly with the working device 2, as a rule, at the same speed.

The previously described device 3 and corresponding conveyor belt 6 are constructed so that it is possible to load cucurbita moschata 1 to the collecting area 5 and further to the vehicle 7 in such a way that the cucurbita moschata 1 are not bruised or damaged in any other way. Weighing of cucurbita moschata 1 is the next step in the described procedure, after which the cucurbita moschata 1 is transported, using an appropriate, not shown device, to the device 9 for washing.

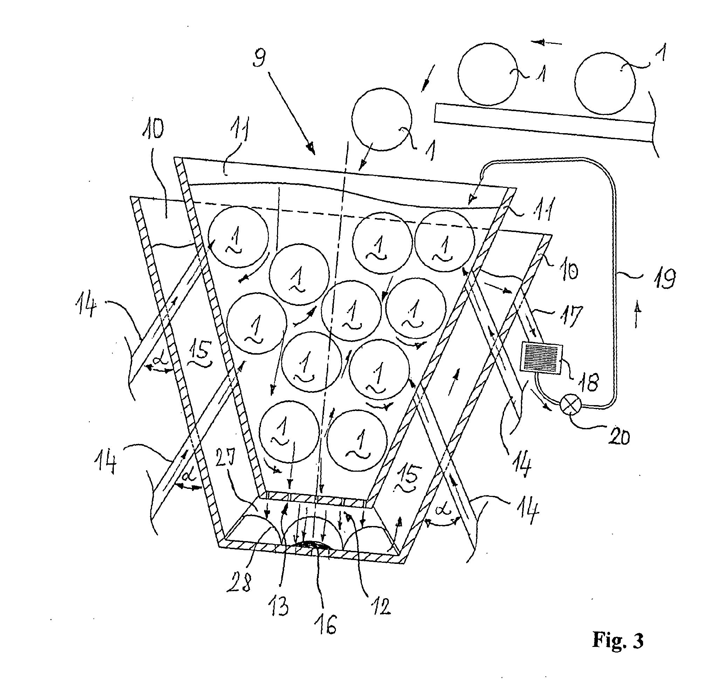

It is evident from Fig. 3 that the device 9 is basically constructed as a double vessel, comprising an outer vessel 10 and inner vessel 11, which is preferentially centrically placed into the outer vessel 10 in a fixed way. It applies that the inner vessel 11 is of smaller dimensions and volume that the outer vessel 10. Vessels 10 and 11 are preferentially of the same shape; in the presented feasibility example, they have the shapes of hollow truncate cones, positioned upside down, of different volumes. In some other feasibility example, the vessels 10 and 11 can be of a different shape, it is even possible that the shapes of these vessels differ in one and the same feasibility example.

The outer vessel 10 is closed on one side with a bottom. As already described, the smaller inner vessel 11 is centrically placed into this outer vessel 10 so that an empty space in the form of a chamber 15 is created round it respectively between the inner vessel 11 and the outer vessel 10. The inner vessel 11 is placed on the bottom of the outer vessel 10 and is appropriately fixed to it, using a base 27. Openings 13 of optional shapes are made in the bottom of the inner vessel 11 so that the bottom has the form of a grate 12.

An optional number of tubes 14, constructed under an optional angle α to the lateral walls of vessels 10 and 11, are placed through the lateral wall of the outer vessel 10 to the inner vessel 11. Tubes 14 can be of the same or of various diameters and sections, of the same or different lengths. Tubes 14, which are flow-through constructed, are placed through the casings of vessels 10 and 11, as a rule, on the entire circumferences of their casings; they are constructed in such a way that they are connected to a water and/or air source on one side as the purpose of tubes 14 is to supply compressed water and/or air into the inner vessel 11.

Under the top of the outer vessel 10 there is a circulation tube 17, which leads through the cleaning device 18, pressure pump 20 and reversing line 19 to the top and then into the inner vessel 11.

The base 27 has the shape of a cone, it is fastened to the outside part of the bottom of inner vessel 11 in a fixed manner, whereby it applies that the basic surface of the base 27 is preferentially of the same shape as the bottom of the vessel 11. In some other feasibility example, it can be of a different shape. The bigger, lower edge of the base 27 is constructed in the form of tooth rim along the entire circumference as cuttings 28 of optional shapes have been made into the tooth rim.

Put the cucurbita moschata 1 that you wish to wash, using the device 9, into the inner vessel 11, which is filled with water. The chamber 15 between the inner vessel 11 and the outer vessel 10 is filled with water as well. Water and/or air under certain pressure are led into the inner vessel 11, through the tubes 14. As a result, turbulence is created inside the inner vessel 11, which causes whirling of pumpkins into all directions. The turbulence created by water and/or air is required to effectively wash and clean the cucurbita moschata 1 as it makes it possible to remove the dirt 16, such as mud etc., from all the pores of the wrinkled outer skin of cucurbita moschata 1. In this process, heavier dirt 16 particles fall onto the bottom of the inner vessel 11, they are removed through openings 13, and then they finally reach the bottom of the outer vessel 10. The pressure of the water inside the device 9 results in dirty water, which contains dirt 16, travelling along the inside wall of the outer vessel 10 to the mouth of the circulation tube 17 and through it into the cleaning device 18, where it gets purified. The water purified in this way is then pushed, by the pressure pump 20, through the reversing line 19 back into the inner vessel 11. This procedure is carried out and repeated during the whole washing procedure of cucurbita moschata 1, using the device 9. In this way it is achieved that the use of clean water for the procedure according to this invention is at a minimum level, i.e. the procedure is extremely rational and environment-friendly because impure water is not discharged into the environment.

According to the described procedure of washing in the device 9, the cucurbita moschata 1 are washed until they are absolutely clean, without any damages caused to the external skin. This means that the device 9 can be used also to wash other agricultural products, vegetables and fruits, even softer ones.

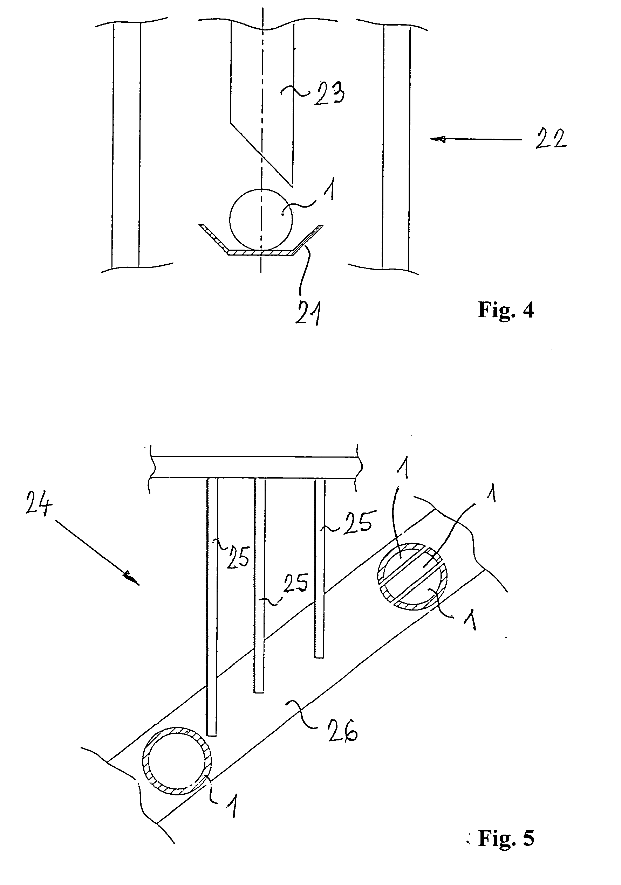

After the washing procedure in the device 9 has been completed, cucurbita moschata 1 are cut into halves, using the device 22, which comprises at least one transport channel 21 with at least one blade 23 placed vertically above it; its operation can be carried out in an optional way, one possibility is on the basis of free fall. Cutting is carried out after a cucurbita moschata 1 come under the blade 23 via the channel 21. The position of cucurbita moschata 1 is adjusted by means of an appropriate device, which is not shown, so that the blade 23 cuts exactly in the middle of a pumpkin and produces two, practically identical halves. For this purpose, the transport of cucurbita moschata 1 under the blade 23 is guided and directed by means of an appropriate electronic device, whereby it is ensured that each cucurbita moschata 1, which is transported successively with others, is positioned under the corresponding blade 23 so that it lies under it in the line that corresponds its central axis, regardless of the size and shape of cucurbita moschata 1. This makes cutting of cucurbita moschata 1 into two almost identical halves possible. The capacity of cutting with the device 22 depends on the capacity of devices which follow. The described procedure is presented in Fig. 4.

After cucurbita moschata 1 have been cut into halves in the device 22, the seeds are sucked from the halves. For this purpose, a suitable suction device of adequate power is used.

Halves of cucurbita moschata 1, from which all the seeds have been removed, are transported, via a conveyor belt 26, to the area of the band saw 24 in such a way that halves are placed on bigger flat surfaces, which have been cut previously. Each half of cucurbita moschata 1 is cut into several smaller pieces by means of the saw 24, which has at least one or more vertical blades 25. The size and the number of pieces depend on the number of blades 25. If it is required to cut these pieces of cucurbita moschata 1 into even smaller pieces, it is possible to lead them through the band saw 24 again; this can be repeated as many times as required. This procedure is described in Fig. 5.

The procedure of cutting cucurbita moschata 1 by the band saw 24 is followed by one of two possible phases of the procedure according to this invention: heat treatment of previously cut pumpkin pieces in the vacuum evaporator or drying of pumpkin pieces in a condensing dryer, depending on the type of food product required. This includes raw pulp, fluid or solid dried products. The above-mentioned evaporator and dryer are not shown in the Figures as their constructions are classical and as such, they, i.e. their constructions, are not the subject of this invention. The subject of this invention are only the procedures of heat treatment and drying treatment of cucurbita moschata 1, which are carried out also by means of the evaporator and dryer.

As mentioned before, heat treatment is carried out in a vacuum evaporator, which preferentially consists of vertical mixing units with blades and of bottom mincing device, which cuts previously cut pieces of cucurbita moschata 1 into smaller pieces, which are, by mixing, transformed into the so called pumpkin pulp. Pulp produced in this way is mixed in the evaporator, and, at the same time, the required component parts are added, such as pectin and citric acid. It applies that pumpkin pulp is, as a rule, mixed under underpressure of 0.5 atm and at a temperature lower than 60°C. In relation to the described heat treatment procedure, these two parameters are the most important as they ensure that the processed pumpkin pulp preserves all its original nutritious substances and vitamins, its natural taste, flavour; in addition to that, it preserves its original natural colour. In view of all this products from such pumpkin pulp are healthy. If, at a later point, water or some other suitable fluid is added to the pumpkin pulp, fluid pumpkin mixture is acquired. Pumpkin pulp or fluid mixture produced by means of the described procedure is stored in appropriate tanks; after that, it is packed into small packages.

In the condensing dryer, drying and candying of pieces of cucurbita moschata 1 is carried out at the temperature between 55°C and 60°C. Products dried in this way preserve all the previously mentioned characteristics of fresh cucurbita moschata 1.

After the drying procedure, dried products are stored in containers, which are appropriate for this purpose, or in rooms for storing food, later they are packed into smaller packages.

The most frequent food products produced from cucurbita moschata 1 according to the previously described procedure are as follows: pumpkin pulp, pumpkin marmalades, pumpkin jams, pumpkin spreads, pumpkin paste for ice cream, candied pumpkins, pumpkin syrups, pumpkin juices, pumpkin dressings for ice cream, pumpkin edible oil, pumpkin vinegar, pumpkin wine, pumpkin champagne, pumpkin brandy, pumpkin liqueur, pumpkin dried pieces, etc. Various herb and/or fruit additives can be added to all the mentioned products made from cucurbita moschata 1 to increase the variety of taste and to achieve various healing effects.

In has to be mentioned that the previously described methods of heat treatment and drying of pumpkins can be used also to process other agricultural products, fruit, vegetables, wild fruit, etc.

## Claims

1. The device and method for processing cucurbita moschata, and food products produced in this way, consist of collecting and transport of pumpkins, washing and cutting of pumpkins, sucking pumpkin seeds, heat treatment of pumpkin pulp, drying of pumpkin pieces and storage and packing of products produced in this way, are **characterised by** the fact that the device (3) for collecting and loading of cucurbita moschata (1), fixed to the working machine (2) by means of a cardan (29), consists of a conveyor belt (4) and collecting area (5); that the device (9) for washing cucurbita moschata (1) consists of a hollow outer vessel (10), which is closed on one side and into which a smaller, also a hollow inner vessel (11) is inserted, preferentially centrically, so that, along the entire circumference of its casing, it is separated from the outer vessel (10) with an air empty space in the form of a chamber (15), whereby the inner vessel (11), with its base (27), is placed on the bottom of the outer vessel (10) and whereby both vessels (10) and (11) are flow-through connected via openings (13), made into the bottom of the inner vessel (11), and via circulation tube (17), running from the upper edge of the outer vessel (10) through the cleaning device (18), consecutively connected, and through pressure pump (20) into the inner vessel (11) as a reversing line (19).

2. The device according to claim 1 is **characterised by** the fact that, through the side walls of the outer vessel (10) and the inner vessel (11) of the device (9), an optional number of tubes (14) of flow-through construction are made; the tubes (14) lead into the inner vessel (11) and are placed under an optional, preferentially acute angle (α), to the outside walls of the vessels (10) and (11) and are of optional section and dimensions.

3. The device according to claim 2 is **characterised by** the fact that tubes (14) are preferentially constructed along the entire circumference of the vessels (10) and (11), and along the entire surface of their side walls, whereby the distances between the tubes (14) and their locations are optional.

4. The device according to claim 1 is **characterised by** the fact that the inner vessel (11) is of a smaller volume than the outer vessel (10), its upper free edge is higher than the upper free edge of the outer vessel (10).

5. The device according to claim 1 is **characterised by** the fact that the bottom of the inner vessel (11) is constructed as a grate (12) due to openings (13), which are made into it.

6. The device according to claim 1 is **characterised by** the fact that the base (27), fixedly attached to the bottom of the inner vessel (11), has cuttings (28) of optional shapes along its circumference.

7. The device according to claim 1 is **characterised by** the fact that a conveyor belt (6) is placed between the collecting area (5) of the device (3) and the trailer (8) of the vehicle (7).

8. The procedure for processing cucurbita moschata, and food products produced in this way, is **characterised by** the fact that it consists of mechanical collecting of cucurbita moschata (1) by means of the device (3) from agricultural land, of loading of cucurbita moschata (1) to the trailer (8) of the vehicle (7) by means of the intermediate conveyor belt (6) and of mechanical washing of cucurbita moschata (1) in the device (9), of mechanical cutting of cucurbita moschata (1) into halves in the device (22), of removing seeds from halves of cucurbita moschata (1), using a suction device, of mechanical cutting of pumpkin halves into smaller pieces, using the band saw (24), of heat treatment of pumpkin pulp in the vacuum evaporator, or alternatively of drying pieces of cucurbita moschata (1) in the dryer, of storing and finally, of filling the products into packages intended for sale; that, according to the described procedure, the following pulp, fluid and solid products are produced from cucurbita moschata (1): pumpkin pulp, pumpkin marmalade, pumpkin jams, pumpkin spreads, pumpkin paste for ice cream, candied pumpkin pieces, pumpkin syrups, pumpkin juices, pumpkin dressings, pumpkin edible oil, pumpkin vinegar, pumpkin wine, pumpkin champagne, pumpkin brandy, pumpkin liqueur, dried pumpkin pieces, etc. all of these with or without herb and/or fruit additives.

9. The procedure according to claim 8 is **characterised by** the fact that, by using the device (3), cucurbita moschata (1) is picked up from the ground by means of the conveyor belt (4) and then, cucurbita moschata (1) is transported to the collecting area (5), from where it is transported via the conveyor belt (6) to the trailer (8) of the accompanying vehicle (7).

10. The procedure according to claim 8 is **characterised by** the fact that into the inner vessel (11) of the device (9), which is filled with water and cucurbita moschata (1), the water and/or air under pressure is led via tubes (14), whereby the water and/or air causes whirling respectively turbulence of water and, consequently, of cucurbita moschata (1), from which, in such a manner, all the dirt is removed, including the dirt from scarcely accessible pores of their skin.

11. The procedure according to claim 10 is **characterised by** the fact that heavier particles of dirt (16) are removed from the inner vessel (11) through the grate (12) to the outer vessel (10) and to the bottom of the outer vessel (10).

12. The procedure according to claim 11 is **characterised by** the fact that dirty water, together with dirt (16) travels upwards the wall of the outer vessel (10) towards the top and it is removed from the outer vessel (10) through the circulation tube (17) into the cleaning device (18), where it is cleaned and then it travels through the pressure pump (20), which returns the cleaned water, via the reversing line (19), to the inner vessel (11), and as a rule, all this is repeated as long as the washing procedure of cucurbita moschata (1) in the device (9) takes place.

13. The procedure according to claim 8 is **characterised by** the fact that heat treatment of pumpkin pulp in the vacuum evaporator is, as a rule, carried out at the temperature lower than 60°C and under underpressure of approximately 0.5 atm.

14. The procedure according to claim 8 is **characterised by** the fact that drying and/or candying of pumpkin pieces in the condensing dryer is carried out at the temperature between 55°C and 60°C.

15. Food products according to claim 8 are **characterised by** the fact that, after processing according the described procedure is carried out, products from cucurbita moschata (1) preserve all the original useful and nutritious substances as well as vitamins, additionally, they preserve all the natural organoleptic properties, such as taste, flavour and colour.

16. The devices and procedures according to claims 1 and 8 are **characterised by** the fact that they can be, in addition to cucurbita moschata (1), used to process other agricultural products, fruits, vegetables and wild fruit.
